# EUROPEAN PATENT APPLICATION

(11) **EP 4 742 394 A1**
(43) Date of publication of application: **13.05.2026**
(21) Application number: 25209457.8
(22) Date of filing: 17.10.2025
(51) Int. Cl.: H01M 50/211, H01M 50/244, H01M 50/247, H01M 50/262

(54) **ASSEMBLY STRUCTURE OF BATTERY FRAME AND BATTERY PACKAGE INCLUDING THE SAME**

(30) Priority: 07.11.2024 KR 20240157079
(71) Applicant: SAMSUNG SDI CO., LTD., Yongin-si, Gyeonggi-do 17084 (KR)
(72) Inventor: KYOUNGSOO, Kim, 17084 Yongin-si, Gyeonggi-do (KR)
(74) Representative: Bardehle Pagenberg Partnerschaft mbB Patentanwälte Rechtsanwälte

(57) **Abstract**

In an assembly structure of a battery frame, the assembly structure includes: a first boss portion protruding from a side edge of a first frame in which a battery cell is mounted and having an insertion hole portion formed in a direction of the side edge; a second boss portion arranged to correspond to the first boss portion on a second frame on which the first frame is seated, and having a coupling hole portion corresponding to the insertion hole portion; and a fastening member having a shaft portion passing through the insertion hole portion and the coupling hole portion, wherein an end portion of the shaft portion is fixed.

## Description

### BACKGROUND

### 1. Field

Aspects of some embodiments of the present disclosure relate to an assembly structure of a battery frame and a battery package including the same.

### 2. Description of the Related Art

Unlike primary batteries that cannot be recharged, secondary batteries refer to batteries capable of being repeatedly charged and discharged without damaging the secondary batteries, and may be used in the field of electronic devices, including mobile phones, PDAs, laptop computers, tablet PCs, and the like.

In cases in which secondary batteries are installed in electronic devices such as laptop computers, these secondary batteries are generally fixed inside a cover frame of an electronic device in a state where a plurality of battery cells are mounted in a battery frame.

In this regard, the battery frame may be fixed and assembled through a separate fixing member such as a fastening bolt while being seated in the cover frame of the electronic device.

Recently, as electronic devices have become relatively lighter and slimmer, battery cells are also becoming lighter and slimmer for the same capacity, resulting in a trend toward decreasing thickness.

However, in applications in which the battery frame is assembled with and fixed to the cover frame by using fastening bolts, it may be desirable to form a fastening portion with sufficient thickness for the fastening bolts to be fastened.

Thus, there has been a difficulty in accommodating the trend toward slimmer batteries because it is difficult to reduce the thickness of the fastening portion above a reference value.

To improve this, in applications in which a double-sided tape is used instead of fastening bolts, due to a structure where the double-sided tape is hidden between a battery frame and a cover frame after assembly, damage to battery cells may occur when the battery frame is separated from the cover frame.

In applications in which an adhesive such as a double-sided tape is used, the thickness between the battery frame and the cover frame increases with the thickness of the adhesive, and attachment variation occurs from the change in size, leading to increased quality risks.

The above information disclosed in this Background section is only for enhancement of understanding of the background and therefore the information discussed in this Background section does not necessarily constitute prior art.

### SUMMARY

According to the present invention, an assembly structure of a battery frame and a battery package as claimed in claims 1 and 9, respectively, are provided. Further embodiments of the invention are described in the dependent claims.

Aspects of some embodiments of the present disclosure relate to an assembly structure of a battery frame and a battery package including the same, and for example, to an assembly structure of a battery frame that enables easy and accurate assembly between frames, and a battery package including the same.

Aspects of some embodiments include an assembly structure of a battery frame and a battery package including the same, the assembly structure enabling relatively easy and accurate assembly between frames even in case that the thickness of a frame decreases in response to the slimming of battery cells.

Aspects of embodiments according to the present disclosure are not limited to the above-described characteristics, and other unmentioned characteristics of embodiments according to the present disclosure can be understood by the following description and will be more clearly understood by the disclosed embodiments of the present disclosure. Also, it will be appreciated that the characteristics of embodiments according to the present disclosure can be realized by the means and combinations thereof indicated in the claims.

According to some embodiments of the present disclosure, an assembly structure of a battery frame includes a first boss portion protruding from a side edge of a first frame in which a battery cell is mounted and having an insertion hole portion formed in a direction of the side edge, a second boss portion arranged to correspond to the first boss portion on a second frame on which the first frame is seated, and having a coupling hole portion corresponding to the insertion hole portion, and a fastening member having a shaft portion passing through the insertion hole portion and the coupling hole portion, wherein an end portion of the shaft portion is fixed.

According to some embodiments, the second boss portion may include a first fixing body that is in close contact with and supports the first boss portion and has a first coupling hole portion, and a second fixing body spaced apart from the first fixing body in an axial direction of the shaft portion and having a second coupling hole portion, wherein a cut section may be formed between the first fixing body and the second fixing body, the cut section exposing a portion of the shaft portion to an outside.

According to some embodiments, the first boss portion may include a first support body that is arranged in the cut section, having a first insertion hole portion, and being in close contact with the first fixing body, and a second support body that is arranged in the cut section, has a second insertion hole portion, and is in close contact with the second fixing body.

According to some embodiments, a distance between the first support body and the second support body may be set to a size of 1 to 2 times a diameter of the shaft portion.

According to some embodiments, an outer side surface of the second fixing body may be inclined downward, an end portion of the shaft portion being fixed to the outer side surface of the second fixing body.

According to some embodiments, an angle between the outer side surface and a surface of the second frame on which the first frame is seated may be set to 45 degrees or more.

According to some embodiments, a height of the first boss portion may be set to a size of 2 to 3 times a diameter of the shaft portion.

According to some embodiments, a protrusion length of the first boss portion may be set to a size of 2 to 3 times a diameter of the shaft portion.

According to some embodiments, the second boss portion may include a first fixing body that is in close contact with and supports one side surface of the first boss portion, a second fixing body that is in close contact with and supports another side surface of the first boss portion, and a third fixing body spaced apart from the second fixing body in an axial direction of the shaft portion, wherein a cut section may be formed between the second fixing body and the third fixing body, the cut section exposing a portion of the shaft portion to an outside.

According to some embodiments, a distance between the second fixing body and the third fixing body may be set to 2 times or less a diameter of the shaft portion.

According to some embodiments of the present disclosure, a battery package includes at least one battery cell, a first frame having the at least one battery cell mounted therein and including a first boss portion protruding from a side edge thereof, the first boss portion having an insertion hole portion formed in a direction of the side edge, and a second frame on which the first frame is seated and which includes a second boss portion corresponding to the first boss portion, the second boss portion having a coupling hole portion formed to correspond to the insertion hole portion, wherein a shaft portion of a fastening member may pass through the insertion hole portion and the coupling hole portion and an end portion of the shaft portion may be fixed, to assemble the first frame to the second frame.

According to some embodiments, the second boss portion may include a first fixing body that is in close contact with and supports the first boss portion and has a first coupling hole portion, and a second fixing body spaced apart from the first fixing body in an axial direction of the shaft portion and having a second coupling hole portion, wherein a cut section may be formed between the first fixing body and the second fixing body, the cut section exposing a portion of the shaft portion to an outside.

According to some embodiments, the first boss portion may include a first support body that is arranged in the cut section, has a first insertion hole portion, and is in close contact with the first fixing body, and a second support body that is arranged in the cut section, has a second insertion hole portion, and is in close contact with the second fixing body.

According to some embodiments, a distance between the first support body and the second support body may be set to a size of 1 to 2 times a diameter of the shaft portion.

According to some embodiments, an outer side surface of the second fixing body may be inclined downward, an end portion of the shaft portion being fixed to the outer side surface of the second fixing body.

According to some embodiments, an angle between the outer side surface and a surface of the second frame on which the first frame is seated may be set to 45 degrees or more.

According to some embodiments, a height of the first boss portion may be set to a size of 2 to 3 times a diameter of the shaft portion.

According to some embodiments, a protrusion length of the first boss portion may be set to a size of 2 to 3 times a diameter of the shaft portion.

According to some embodiments, the second boss portion may include a first fixing body that is in close contact with and supports one side surface of the first boss portion, a second fixing body that is in close contact with and supports another side surface of the first boss portion, and a third fixing body spaced apart from the second fixing body in an axial direction of the shaft portion, wherein a cut section may be formed between the second fixing body and the third fixing body, the cut section exposing a portion of the shaft portion to an outside.

According to some embodiments, a distance between the second fixing body and the third fixing body may be set to 2 times or less a diameter of the shaft portion.

### BRIEF DESCRIPTION OF THE DRAWINGS

The accompanying drawings illustrate aspects of some embodiments of the present disclosure and, together with the detailed description of the disclosure, which will be provided below, serve to provide further understanding of the technical spirit of the disclosure. However, the disclosure is not to be construed as being limited to the matters described in the drawings in which:
FIG. 1 is an exploded perspective view of an assembly structure of a battery frame and a battery package including the same, according to some embodiments;
FIG. 2 is an assembly perspective view of FIG. 1;
FIG. 3 is an assembly cross-sectional view illustrating the main components of an assembly structure of a battery frame, according to some embodiments;
FIGS. 4A to 4D are views illustrating an assembly process for a battery frame, according to some embodiments;
FIGS. 5A to 5D are views illustrating an assembly process for a battery frame, according to some embodiments; and
FIG. 6 is an assembly cross-sectional view illustrating the main components of an assembly structure of a battery frame, according to some embodiments.

### DETAILED DESCRIPTION

Hereinafter, example embodiments of the disclosure will be described in detail with reference to the accompanying drawings. The terms or words used in the specification and the claims should not be construed as being limited to ordinary or dictionary meanings and should be construed as meanings and concepts consistent with the spirit of the disclosure based on a principle that an inventor can appropriately define concepts of terms to explain his/her invention in the best way. Therefore, it should be understood that the embodiments described herein and the configurations illustrated in the drawings are merely some of the example embodiments of the disclosure and do not represent all technical ideas of the disclosure, and thus various equivalents and modifications that can replace these embodiments can be made at the time of filing this application.

Also, the terms "include (comprise)" and/or "including (comprising)" as used herein specify the presence of the stated shapes, numbers, steps, operations, members, elements, and/or groups thereof and do not preclude the presence or addition of one or more other shapes, numbers, operations, members, elements, and/or groups thereof.

To help understand the disclosure, the accompanying drawings are not shown to actual scale, and the dimensions of some components may be exaggerated. Also, like reference numerals may refer to like elements in different embodiments.

The expression indicating that two comparative objects are identical to each other means that the two comparative objects are "substantially identical" to each other. Therefore, the wording "substantially identical" may include deviations considered low in the art, for example, deviations within 5%. A case where a parameter is uniform in a certain region may mean that the parameter is uniform from an average point of view.

It will be understood that, although the terms "first," "second," and the like may be used herein to describe various elements, but these elements should not be limited by these terms. There terms are only used to distinguish one element from another element, and a first element may also be a second element, unless otherwise specifically stated herein.

Throughout the specification, each element may be singular or plural unless otherwise specifically stated herein.

It well be understood that, in case that an element is referred to as being "above (or below)" or "on (or under)" another element, the element can be directly on an upper surface (or lower surface) of the other element, and it may also mean that there are other intervening elements between the element and the other element located on (or under) the element.

It will be understood that, in case that an element is referred to as being "connected," "coupled," or "linked" to another element, the element can be directly connected or linked to the other element, and other elements are "interposed" between the element and the other element, or the element may be "connected," "coupled," or "linked" to the other element via other elements. In case that a portion is referred to as being electrically coupled to another portion, it includes not only a case where the portion is directly connected to the other portion, but also a case where the portion is connected to the other portion with other components present therebetween.

Throughout the specification, "A and/or B" means "A, or B, or A and B," unless otherwise specifically stated herein. The term "and/or" includes any or all combinations of a plurality of listed items. Unless otherwise specifically stated herein, the expression "C to D" means greater than or equal to C and less than or equal to D.

The terms used herein are to describe embodiments of the disclosure and are not intended to limit the disclosure.

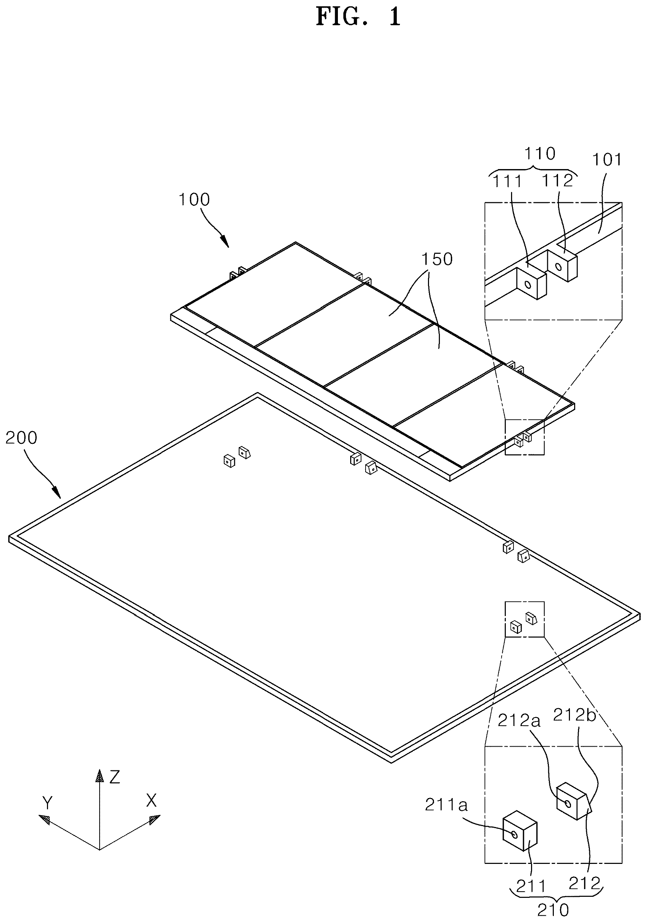

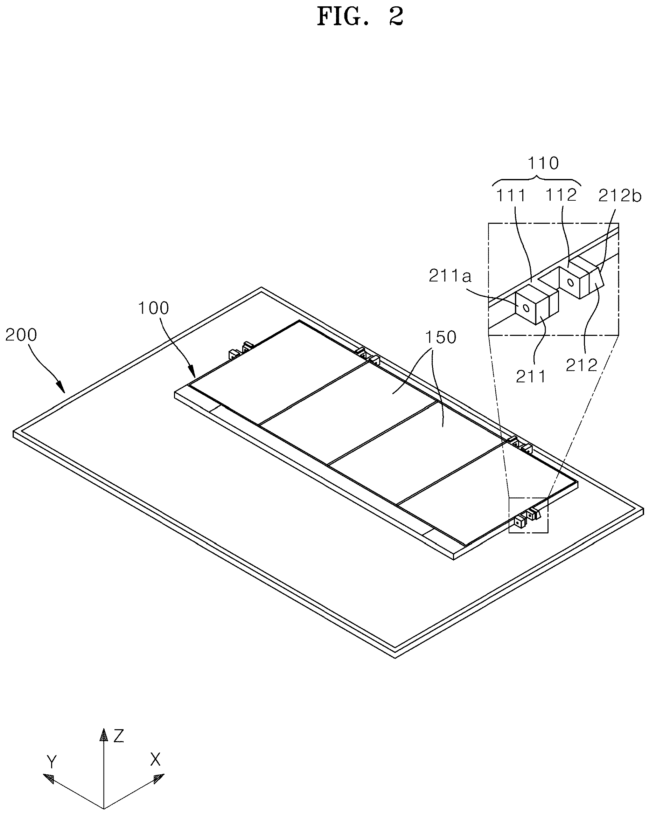

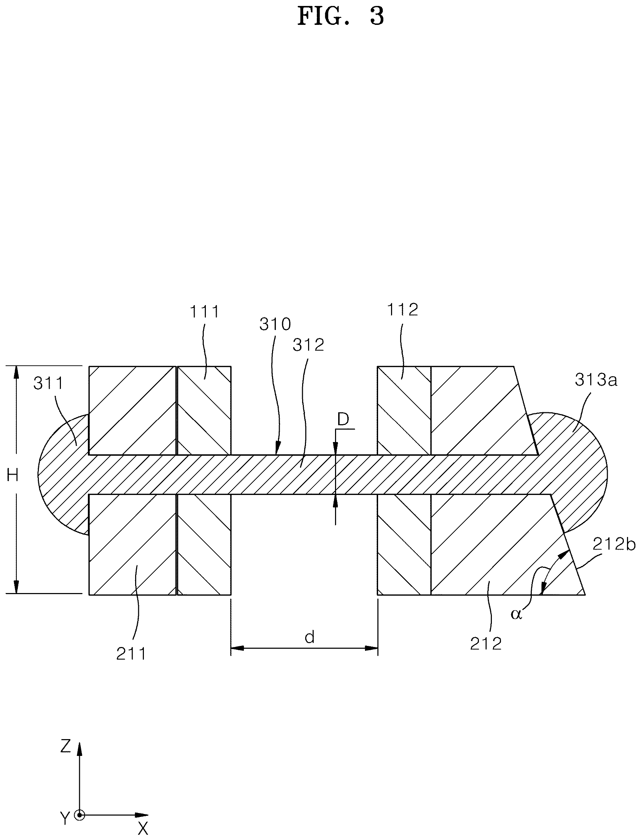

FIG. 1 is an exploded perspective view of an assembly structure of a battery frame and a battery package 1 including the same, according to some embodiments. FIG. 2 is an assembly perspective view of FIG. 1. FIG. 3 is an assembly cross-sectional view illustrating the main components of an assembly structure of a battery frame, according to some embodiments.

Referring to FIGS. 1 and 2, the battery package 1 according to some embodiments of the disclosure is a package including an assembly structure of a battery frame, according to some embodiments of the disclosure and may include a first frame 100, a plurality of battery cells 150 arranged in the first frame 100, and a second frame 200 on and to which the first frame 100 is seated and assembled.

The battery package 1 according to some embodiments of the disclosure may include a structure in which the first frame 100, which is a battery frame having the plurality of battery cells 150 mounted therein, is assembled to the second frame 200, which is a set frame of an electronic device.

The battery package 1 according to some embodiments of the disclosure may also refer to an electronic device, such as a notebook computer, assembled using the assembly structure according to some embodiments of the disclosure.

Referring to FIGS. 1 to 3, the assembly structure of the battery frame, according to some embodiments of the disclosure, is a structure in which the first frame 100 having the plurality of battery cells 150 mounted therein is seated on and assembled to the second frame 200.

The assembly structure of the battery frame, according to some embodiments of the disclosure, may include a first boss portion 110 provided on the first frame 100, a second boss portion 210 provided on the second frame 200, and a fastening member 310 coupled to the first boss portion 110 and the second boss portion 210.

The assembly structure of the battery frame, according to some embodiments, is an assembly structure in which the first frame 100 is seated on an inner surface of the second frame 200 in a vertical direction (Z-axis direction of FIG. 1), and then the fastening member 310 is coupled to the first boss portion 110 and the second boss portion 210 in a horizontal direction (X-axis direction or Y-axis direction of FIG. 1).

For example, the assembly structure of the battery frame, according to some embodiments, is not a structure in which the fastening member 310 is coupled in a vertical direction (Z-axis direction of FIG. 1), which is a thickness direction (Z-axis direction of FIG. 1) of the first frame 100 and the second frame 200, but is a structure in which the fastening member 310 is coupled in a horizontal direction (X-axis direction or Y-axis direction of FIG. 1) perpendicular to the thickness direction.

Thus, the assembly structure of the battery frame, according to some embodiments, may minimize or reduce the thickness of the first frame 100 and the second frame 200, and accordingly may accommodate the slimming of the battery cells 150.

In the assembly structure of the battery frame, according to some embodiments of the disclosure, in applications in which the fastening member 310 is coupled to the first boss portion 110 and the second boss portion 210, a portion of a shaft portion 312 of the fastening member 310 may be exposed.

Thus, in the assembly structure of the battery frame, according to some embodiments, in applications in which the first frame 100 is separated from the second frame 200 after assembly, the exposed portion of the shaft portion 312 of the fastening member 310 may be cut, thereby enabling relatively simple disassembly, and thus man-hours for separation work may be reduced, resulting in relatively improved separation workability.

According to some embodiments, the first frame 100 may be a battery frame in which the plurality of battery cells 150 are mounted, and the second frame 200 may be a set frame of an electronic device, such as a notebook computer, using the plurality of battery cells 150 as a power source.

According to some embodiments, first boss portions 110 may be provided on at least opposite sides, among side edges 101, of the first frame 100, and a plurality of second boss portions 210 may be provided at positions of the second frame 200 which correspond to the first boss portions 110.

As such, the assembly structure of the battery frame, according to some embodiments of the disclosure, may be arranged in a plurality of positions in a horizontal direction (X-axis direction or Y-axis direction of FIG. 1), but these structures have the same configuration while differing only in arrangement positions and directions. Thus, in the following description, an assembly structure arranged on one side edge 101 in a horizontal direction (X-axis direction of FIG. 1), among the side edges 101, of the first frame 100 will be described as an example for convenience.

According to some embodiments, in the assembly structure of the battery frame, according to some embodiments of the disclosure, various members may be applied as the fastening member 310 such that the shaft portion 312 passes through the first boss portion 110 and the second boss portion 210, and in a state where a head portion 311 is supported by the first boss portion 110, an end portion 313 is fixed to an outer side surface 212b of the second boss portion 210.

For example, the fastening member 310 may be a bolt or a rivet.

As an example, in case that a bolt is applied, an end portion of the bolt may be fastened with a nut on the outer side surface 212b of the second boss portion 210 to be fixed in position.

As another example, in case that a rivet is applied, an end portion of the rivet may be press-fitted and fixed by riveting onto the outer side surface 212b of the second boss portion 210. The end portion of the rivet may also be fixed by a method such as welding.

In the following description, a case where a rivet is applied as the fastening member 310 will be described as an example for convenience, and the fastening member 310 will be collectively referred to as a rivet.

Referring to FIGS. 1 to 3, according to some embodiments, the first boss portion 110 may protrude from the side edge 101 of the first frame 100 in a horizontal direction (Y-axis direction of FIG. 1).

According to some embodiments, the first boss portion 110 may be formed as a pair including a first support body 111 and a second support body 112 that are spaced apart from each other in a direction (X-axis direction of FIG. 1) of the side edge 101 of the first frame 100.

The first support body 111 and the second support body 112 of the first boss portion 110 may protrude from the side edge 101 of the first boss portion 110 in a lateral direction (Y-axis direction of FIG. 1) to have a certain length L.

Although it is illustrated that the first support body 111 and the second support body 112 protrude to the same length, embodiments according to the present disclosure are not limited thereto, and the first support body 111 and the second support body 112 may also protrude to different lengths.

A protrusion length L of the first support body 111 and the second support body 112 may be set to a size of 2 to 3 times a diameter D of the shaft portion 312 of the rivet 310.

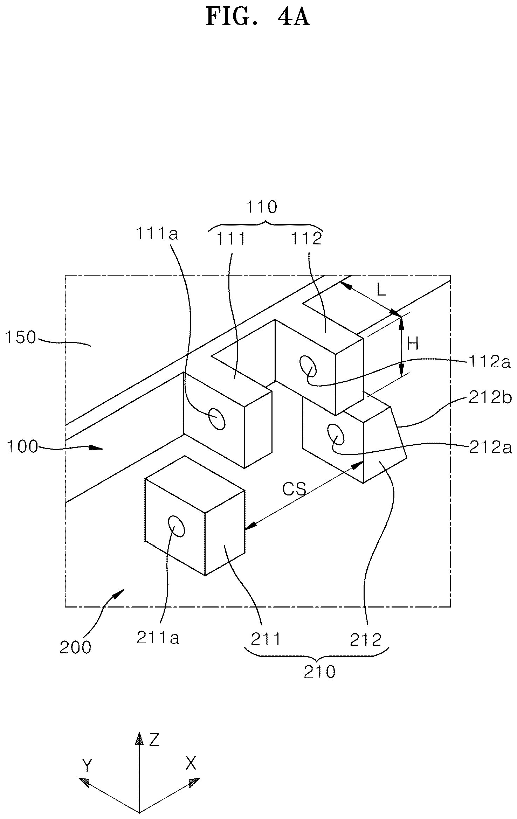

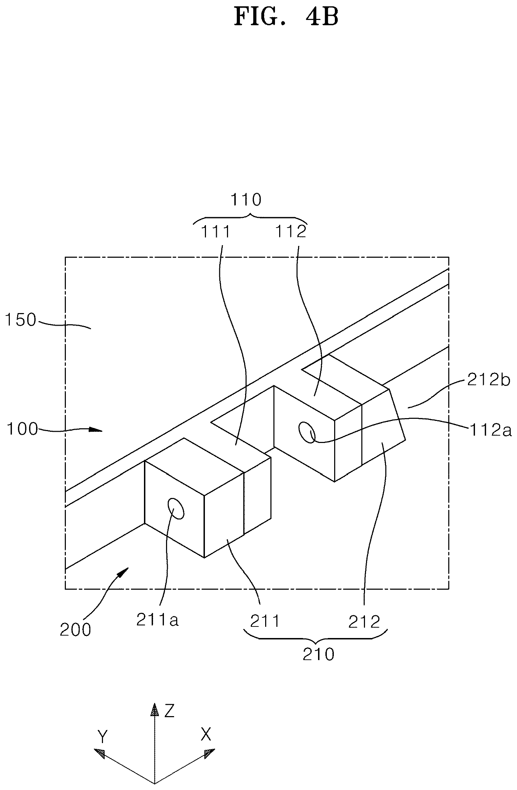

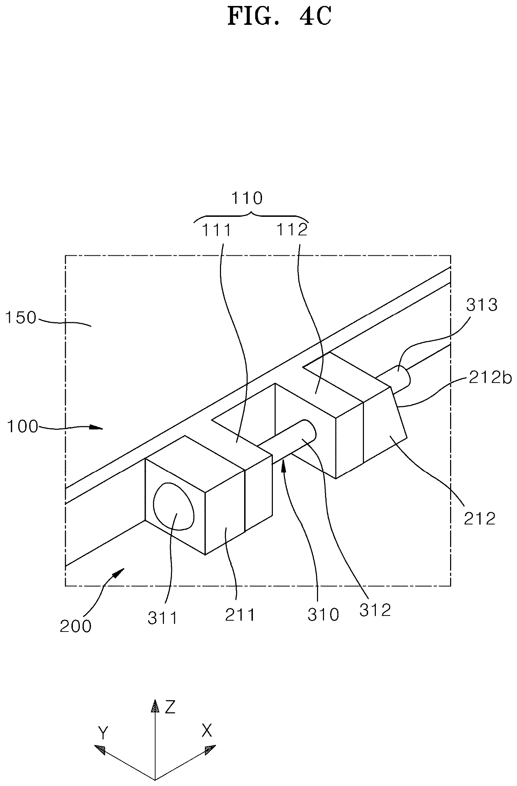

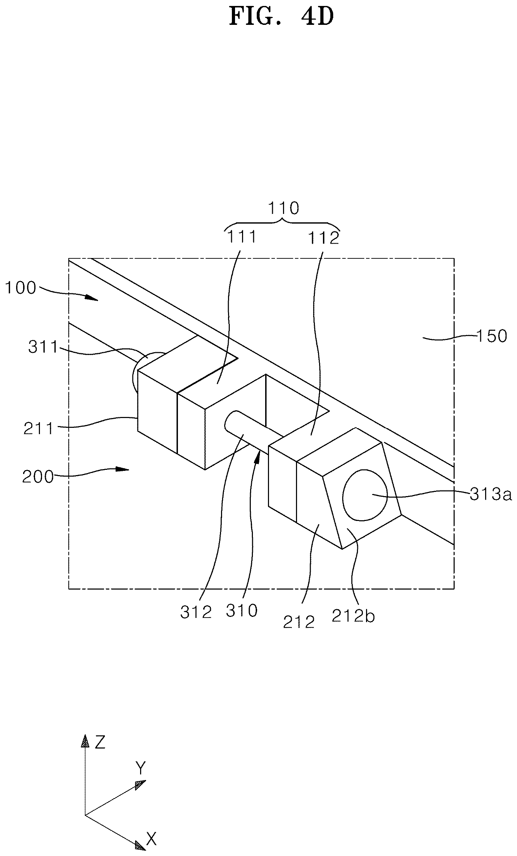

According to some embodiments, a height H in a vertical direction (Z-axis direction of FIG. 4) of the first support body 111 and the second support body 112 may be set to a size of 2 to 3 times the diameter D of the shaft portion 312 of the rivet 310.

For example, in case that the rivet 310 is coupled to the first boss portion 110, a force that compresses the first support body 111 and the second support body 112 is generated in an axial direction (X-axis direction of FIG. 4) of the shaft portion 312.

In this regard, the protrusion length L and the height H of the first support body 111 and the second support body 112 must be set to at least twice the diameter D of the shaft portion 312 of the rivet 310. This is because a pressure acting on the first support body 111 and the second support body 112 may be sufficiently distributed and the load may be effectively supported.

In case that the protrusion length L and the height H of the first support body 111 and the second support body 112 are set to exceed 3 times the diameter D of the shaft portion 312 of the rivet 310, the load distribution effect of the first support body 111 and the second support body 112 may increase, but manufacturing complexity and manufacturing costs may increase, and an unnecessary increase in volume may cause limitations in an assembly space.

The first support body 111 and the second support body 112 of the first boss portion 110 may have a rectangular shape to be stably seated on the second frame 200 and be in close contact (e.g., direct contact) with the second boss portion 210.

A first insertion hole portion 111a and a second insertion hole portion 112a may be formed in the first support body 111 and the second support body 112, respectively, of the first boss portion 110 in a direction (X-axis direction of FIG. 1) of the side edge 101 of the first frame 100.

The shaft portion 312 of the rivet 310 may pass through the first insertion hole portion 111a of the first support body 111 and the second insertion hole portion 112a of the second support body 112 in case that the first boss portion 110 is assembled to the second boss portion 210.

Referring to FIGS. 1 to 3, according to some embodiments, the second boss portion 210 may be arranged to correspond to the first boss portion 110 on the second frame 200 on which the first frame 100 is seated.

According to some embodiments, the second boss portion 210 may include a first fixing body 211 that is in close contact with and supports the first support body 111 of the first boss portion 110 and a second fixing body 212 that is in close contact with and supports the second support body 112 of the first boss portion 110.

The second fixing body 212 of the second boss portion 210 may be spaced apart from the first fixing body 211 of the second boss portion 210 in an axial direction (X-axis direction of FIG. 4) of the shaft portion 312 of the rivet 310. In this regard, a cut section CS, which is a space through which the shaft portion 312 of the rivet 310 is exposed, may be formed between the first fixing body 211 and the second fixing body 212.

For example, the first support body 111 and the second support body 112 of the first boss portion 110 may be arranged in the cut section CS formed between the first fixing body 211 and the second fixing body 212 of the second boss portion 210.

For example, in case that the first support body 111 and the second support body 112 are arranged in the cut section CS, the first support body 111 may be in close contact with the first fixing body 211 and the second support body 112 may be in close contact with the second fixing body 212.

Thus, in case in that the first support body 111 and the second support body 112 are arranged in the cut section CS, a portion of the shaft portion 312 of the rivet 310 may be exposed through the space between the first support body 111 and the second support body 112.

Therefore, after assembling the first frame 100 and the second frame 200, in case that the exposed portion of the shaft portion 312 is cut and the rivet 310 is removed, the first frame 100 may be separated from the second frame 200, thus being in a disassembled state.

In this regard, a distance d between the first support body 111 and the second support body 112 may be set to 1 to 2 times the diameter D of the shaft portion 312 of the rivet 310.

In case that the distance d between the first support body 111 and the second support body 112 is smaller than the diameter D of the shaft portion 312, it is difficult to cut the exposed portion of the shaft portion 312.

According to some embodiments, in case that the distance d between the first support body 111 and the second support body 112 exceeds twice the diameter D of the shaft portion 312, if the head portion 311 of the rivet 310 is pressed or the end portion 313 of the shaft portion 312 is riveted, defects, such as bending of or damage to the exposed portion of the shaft portion 312, may occur.

The first fixing body 211 and the second fixing body 212 of the second boss portion 210 may have a rectangular shape to correspond to the first support body 111 and the second support body 112 of the first boss portion 110.

A first coupling hole portion 211a and a second coupling hole portion 212a may be formed in the first fixing body 211 and the second fixing body 212, respectively, of the second boss portion 210 in a direction (X-axis direction of FIG. 1) of the side edge 101 of the first frame 100.

In case that the first boss portion 110 is assembled to the second boss portion 210, the shaft portion 312 of the rivet 310 may pass through the first coupling hole portion 211a of the first fixing body 211 and the second coupling hole portion 212a of the second fixing body 212.

Referring to FIG. 3, an outer side surface 212b, which is a coupling surface to which the end portion 313 of the shaft portion 312 of the rivet 310 is riveted, may be formed on an outer side (right side in an X-axis direction of FIG. 3) of the second fixing body 212.

The outer side surface 212b of the second fixing body 212 is a portion where the end portion 313 of the shaft portion 312 of the rivet 310 is riveted to form a riveted portion 313a having a shape similar to the head portion 311.

The outer side surface 212b of the second fixing body 212 may be inclined downward in a direction (X-axis direction of FIG. 3) in which the shaft portion 312 of the rivet 310 passes.

In this regard, an angle α between the outer side surface 212b of the second fixing body 212 and a surface of the second frame 200 on which the first frame 100 is seated may be 45 degrees or more.

In case that the angle α between the outer side surface 212b of the second fixing body 212 and the surface of the second frame 200 is less than 45 degrees, the riveted portion 313a may undergo shear fracture because a force acting in a vertical direction (Z-axis direction of FIG. 3) is greater than a force acting in the axial direction (X-axis direction of FIG. 3) of the shaft portion 312.

Therefore, the angle α between the outer side surface 212b of the second fixing body 212 and the surface of the second frame 200 may be set to 45 degrees or more, so that the force acting on the riveted portion 313a in the axial direction (X-axis direction of FIG. 3) of the shaft portion 312 is greater than the force acting on the riveted portion 313a in the vertical direction (Z-axis direction of FIG. 3).

Hereinafter, an assembly process for a battery frame, according to some embodiments of the disclosure, will be described in further detail with reference to the accompanying drawings.

FIGS. 4A to 4D are views illustrating an assembly process for a battery frame, according to some embodiments.

Referring to FIG. 4A, the first frame 100 may be arranged on the second frame 200 so that the first boss portion 110 is positioned on the second boss portion 210.

In this regard, the first support body 111 and the second support body 112 of the first boss portion 110 may be positioned between the first fixing body 211 and the second fixing body 212 of the second boss portion 210.

The first insertion hole portion 111a and the second insertion hole portion 112a may be formed in the first support body 111 and the second support body 112, respectively, of the first boss portion 110 in a direction (X-axis direction) of the side edge 101 of the first frame 100.

In this regard, the first insertion hole portion 111a and the second insertion hole portion 112a may be positioned in a straight line in the axial direction (X-axis direction) of the shaft portion 312 so that the shaft portion 312 (see FIG. 3C) of the rivet 310 (see FIG. 3C) passes through the first insertion hole portion 111a and the second insertion hole portion 112a.

The first coupling hole portion 211a and the second coupling hole portion 212a may be formed in the first fixing body 211 and the second fixing body 212, respectively, of the second boss portion 210 in a direction (X-axis direction) of the side edge 101 of the first frame 100.

In this regard, the first coupling hole portion 211a and the second coupling hole portion 212a may also be positioned in a straight line in the axial direction (X-axis direction) of the shaft portion 312 so that the shaft portion 312 (see FIG. 3C) of the rivet 310 (see FIG. 3C) passes through the first coupling hole portion 211a and the second coupling hole portion 212a.

Referring to FIG. 4B, the first frame 100 in which the battery cells 150 are mounted may be seated on the second frame 200 in a vertical direction (Z-axis direction).

In this regard, the first support body 111 of the first boss portion 110 may be in close contact with the first fixing body 211 of the second boss portion 210, and the second support body 112 of the first boss portion 110 may be in close contact with the second fixing body 212 of the second boss portion 210.

In this state, the first insertion hole portion 111a of the first support body 111 may be in communication with the first coupling hole portion 211a of the first fixing body 211, and the second insertion hole portion 112a of the second support body 112 may be in communication with the second coupling hole portion 212a of the second fixing body 212.

According to some embodiments, the first support body 111 and the second support body 112 may be arranged between the first fixing body 211 and the second fixing body 212, and thereafter, a space through which the shaft portion 312 (see FIG. 4C) of the rivet 310 (see FIG. 4C) is exposed may be provided between the first support body 111 and the second support body 112.

Referring to FIG. 4C, the shaft portion 312 of the rivet 310 may be sequentially inserted into the first coupling hole portion 211a of the first fixing body 211, the first insertion hole portion 111a of the first support body 111, the second insertion hole portion 112a of the second support body 112, and the second coupling hole portion 212a of the second fixing body 212.

In this regard, the head portion 311 of the rivet 310 may be seated and supported on the outer side surface of the first fixing body 211, and the end portion 313 of the shaft portion 312 of the rivet 310 may protrude outward from the outer side surface 212b of the second fixing body 212.

The outer side surface 212b of the second fixing body 212 may be inclined downward in a direction (X-axis direction of FIG. 3) in which the shaft portion 312 of the rivet 310 passes, and an angle α between the outer side surface 212b of the second fixing body 212 and a surface of the second frame 200 on which the first frame 100 is seated may be 45 degrees or more.

Referring to FIG. 4D, the first boss portion 110 may be fixed to the second boss portion 210 by riveting the end portion 313 of the shaft portion 312 of the rivet 310, the end portion 313 protruding outward from the outer side surface 212b of the second fixing body 212.

In this regard, the end portion 313 of the shaft portion 312 of the rivet 310 may be riveted to form a riveted portion 313a having a shape similar to the head portion 311, and a portion of the shaft portion 312 of the rivet 310 may be exposed through the space between the first support body 111 and the second support body 112 of the first boss portion 110.

Therefore, after assembling the first frame 100 and the second frame 200, in case that the exposed portion of the shaft portion 312 is cut and the rivet 310 is removed, the first frame 100 may be separated from the second frame 200, thus being in a disassembled state.

Next, an assembly structure of a battery frame, according to some embodiments of the disclosure, will be described with reference to the accompanying drawings.

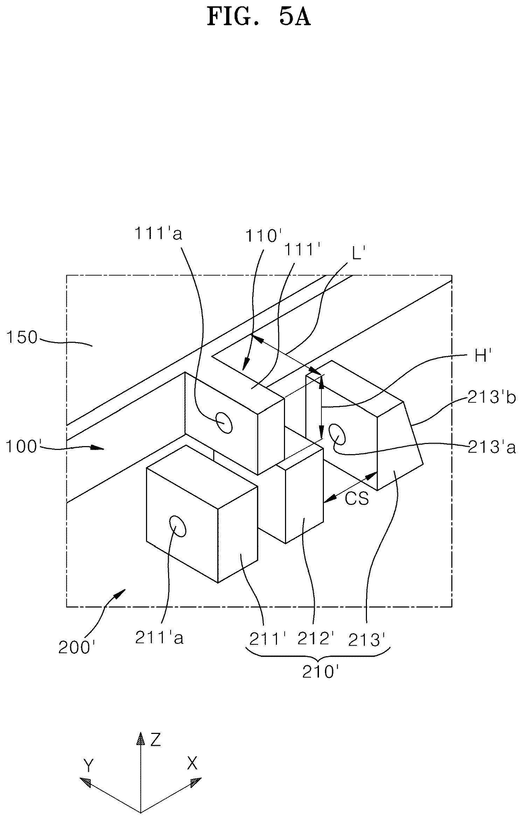

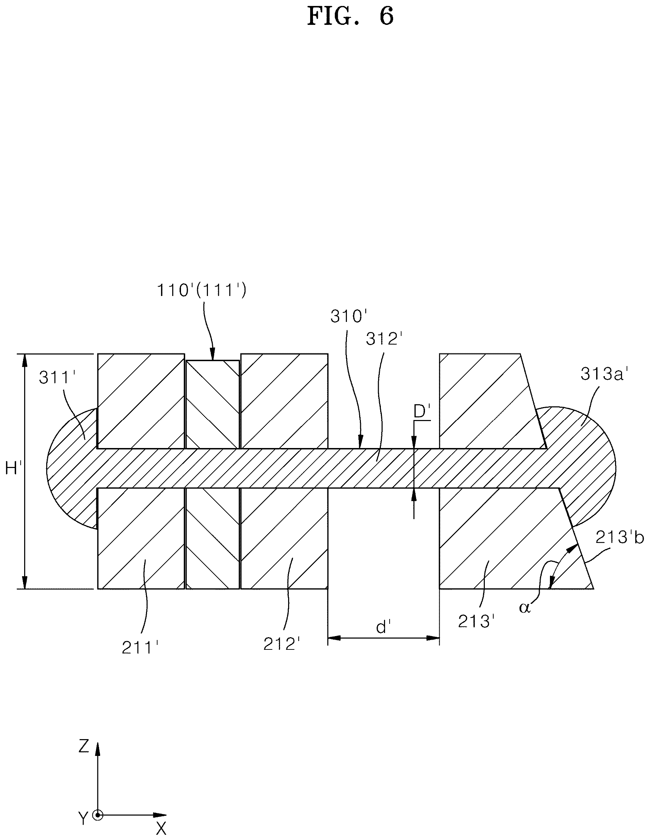

FIGS. 5A to 5D are views illustrating an assembly process for a battery frame, according to some embodiments. FIG. 6 is an assembly cross-sectional view illustrating the main components of an assembly structure of a battery frame, according to some embodiments.

Referring to FIGS. 5A to 6, the assembly structure of the battery frame, according to some embodiments of the disclosure, is a structure in which, similar to the above-described embodiments, a first frame 100' in which the battery cells 150 are mounted is seated on and assembled to a second frame 200' of an electronic device.

The assembly structure of the battery frame, according to some embodiments of the disclosure, may include a first boss portion 110' provided on the first frame 100', a second boss portion 210' provided on the second frame 200', and a rivet 310' coupled to the first boss portion 110' and the second boss portion 210'.

The assembly structure of a battery frame, according to some embodiments, may be an assembly structure in which the first frame 100' is seated on an inner surface of the second frame 200' in a vertical direction (Z-axis direction of FIG. 5A), and then the rivet 310' is coupled to the first boss portion 110' and the second boss portion 210' in a horizontal direction (X-axis direction or Y-axis direction of FIG. 5A).

For example, the assembly structure of the battery frame, according to some embodiments, is not a structure in which a fastening member is coupled in a vertical direction (Z-axis direction of FIG. 5A), which is a thickness direction (Z-axis direction of FIG. 5A) of the first frame 100' and the second frame 200', but is a structure in which a fastening member is coupled in a horizontal direction (X-axis direction or Y-axis direction of FIG. 5A) perpendicular to the thickness direction.

Thus, the assembly structure of the battery frame, according to some embodiments, may minimize the thickness of the first frame 100' and the second frame 200', and accordingly may accommodate the slimming of the battery cells 150.

In the assembly structure of the battery frame, according to some embodiments of the disclosure, in case that the rivet 310' is coupled to the first boss portion 110' and the second boss portion 210', a portion of a shaft portion 312' of the rivet 310' may be exposed.

Thus, in the assembly structure of the battery frame, according to some embodiments, in case that the first frame 100' is separated from the second frame 200' after assembly, the exposed portion of the shaft portion 312' of the rivet 310' may be cut, thereby enabling simple disassembly, and thus man-hours for separation work may be reduced, resulting in improved separation workability.

According to some embodiments of the disclosure, the first frame 100' may be a battery frame in which the plurality of battery cells 150 are mounted, and the second frame 200' may be a cover frame of an electronic device, such as a notebook computer, using the plurality of battery cells 150 as a power source.

According to some embodiments, first boss portions 110' may be provided on at least opposite sides, among side edges, of the first frame 100', and a plurality of second boss portions 210' may be provided at positions of the second frame 200' which correspond to the first boss portions 110'.

As such, the assembly structure of the battery frame, According to some embodiments of the disclosure, may be arranged in a plurality of positions in a horizontal direction (X-axis direction or Y-axis direction of FIG. 5A), but these structures have the same configuration while differing only in arrangement positions and directions. Thus, in the following description, an assembly structure arranged on one side edge in a horizontal direction (X-axis direction of FIG. 5A), among the side edges, of the first frame 100' will be described as an example for convenience.

Referring to FIGS. 5A to 6, according to some embodiments, the first boss portion 110' may protrude from a side edge of the first frame 100' in a horizontal direction (Y-axis direction of FIG. 5A).

According to some embodiments, the first boss portion 110' may include a single support body 111' protruding from a side edge of the first frame 100.

The support body 111' may protrude from the side edge of the first frame 100' to have a certain length L in a lateral direction (Y-axis direction of FIG. 5A).

A protrusion length L of the support body 111' may be set to a size of 2 to 3 times a diameter D' of the shaft portion 312' of the rivet 310'.

According to some embodiments, a height H' in a vertical direction (Z-axis direction of FIG. 6) of the support body 111' may be set to a size of 2 to 3 times the diameter D' of the shaft portion 312' of the rivet 310'.

For example, in case that the rivet 310' is coupled to the support body 111' of the first boss portion 110', a force that compresses the support body 111' is generated in an axial direction (X-axis direction of FIG. 6) of the shaft portion 312'.

In this regard, the protrusion length L and the height H' of the support body 111' must be set to at least twice the diameter D' of the shaft portion 312' of the rivet 310'. This is because a pressure acting on the support body 111' may be sufficiently distributed and the load may be effectively supported.

In case that the protrusion length L and the height H' of the support body 111' exceeds 3 times the diameter D' of the shaft portion 312' of the rivet 310', the load distribution effect of the support body 111' may increase, but manufacturing complexity and manufacturing costs may increase, and an unnecessary increase in volume may cause limitations in an assembly space.

The support body 111' of the first boss portion 110' may have a rectangular shape to be stably seated on the second frame 200' and be in close contact (e.g., direct contact) with the second boss portion 210'.

An insertion hole portion 111'a may be formed in the support body 111' of the first boss portion 110' in a direction (X-axis direction of FIG. 5A) of a side edge of the first frame 100'.

The shaft portion 312' of the rivet 310' may pass through the first insertion hole portion 111'a of the support body 111' in case that the first boss portion 110' is assembled to the second boss portion 210'.

Referring to FIGS. 5A to 6, according to some embodiments, the second boss portion 210' may be arranged to correspond to the first boss portion 110' on the second frame 200' on which the first frame 100' is seated.

According to some embodiments, the second boss portion 210' may include a first fixing body 211' that is in close contact with and supports one side surface of the support body 111' of the first boss portion 110', a second fixing body 212' that is in close contact with and supports another side surface of the support body 111', and a third fixing body 213' spaced apart from the second fixing body 212' in a horizontal direction (X-axis direction of FIG. 5A).

Because the third fixing body 213' of the second boss portion 210' is spaced apart from the second fixing body 212', a cut section CS, which is a space through which the shaft portion 312' of the rivet 310' is exposed, may be formed between the third fixing body 213' and the second fixing body 212'.

For example, in case that the support body 111' of the first boss portion 110' is inserted between the first fixing body 211' and the second fixing body 212' of the second boss portion 210', a cut section CS through which a portion of the shaft portion 312' of the rivet 310' is exposed may be formed between the second fixing body 212' and the third fixing body 213' of the second boss portion 210'.

Therefore, after assembling the first frame 100' and the second frame 200', in case that the exposed portion of the shaft portion 312' is cut and the rivet 310' is removed, the first frame 100' may be separated from the second frame 200', thus being in a disassembled state.

In this regard, a distance d' between the second fixing body 212' and the third fixing body 213' may be set to 1 to 2 times or less the diameter D' of the shaft portion 312' of the rivet 310'.

In case that the distance d' between the second fixing body 212' and the third fixing body 213' is less than the diameter D' of the shaft portion 312', it is difficult to cut the exposed portion of the shaft portion 312'.

In case that the distance d' between the second fixing body 212' and the third fixing body 213' exceeds twice the diameter D' of the shaft portion 312', if the head portion 311' of the rivet 310' is pressed or the end portion 313' of the shaft portion 312' is riveted, defects, such as bending of or damage to the exposed portion of the shaft portion 312', may occur.

The first fixing body 211' to the third fixing body 213' of the second boss portion 210' may have a rectangular shape corresponding to the support body 111' of the first boss portion 110'.

A first coupling hole portion 211'a, a second coupling hole portion 212'a, and a third coupling hole portion 213'a may be formed in the first fixing body 211', the second fixing body 212', and the third fixing body 213', respectively, of the second boss portion 210' in a direction (X-axis direction of FIG. 5A) of the side edge 101 of the first frame 100'.

The shaft portion 312' of the rivet 310' may pass through the first coupling hole portion 211'a of the first fixing body 211' to the third coupling hole portion 213'a of the third fixing body 211' in case that the first boss portion 110' is assembled to the second boss portion 210'.

Referring to FIG. 6, an outer side surface 213'b, which is a coupling surface to which an end portion 313' of the shaft portion 312' of the rivet 310' is riveted, may be formed on an outer side (right side in the X-axis direction of FIG. 6) of the third fixing body 213'.

The outer side surface 213'b of the third fixing body 213' is a portion where an end portion 313' of the shaft portion 312' of the rivet 310' is riveted to form a riveted portion 313'a having a shape similar to the head portion 311'.

The outer side surface 213'b of the third fixing body 213' may be inclined downward in a direction (X-axis direction of FIG. 6) in which the shaft portion 312' of the rivet 310' passes.

In this regard, an angle α between the outer side surface 213'b of the third fixing body 213' and a surface of the second frame 200' on which the first frame 100' is seated may be 45 degrees or more.

In case that the angle α between the outer side surface 213'b of the third fixing body 213' and the surface of the second frame 200' is less than 45 degrees, the riveted portion 313'a may undergo shear fracture because a force acting in a vertical direction (Z-axis direction of FIG. 6) is greater than a force acting in an axial direction (X-axis direction of FIG. 6) of the shaft portion 312'.

Therefore, the angle α between the outer side surface 213'b of the third fixing body 213' and the surface of the second frame 200' may be set to 45 degrees or more, so that the force acting on the riveted portion 313'a in the axial direction (X-axis direction of FIG. 6) of the shaft portion 312' is greater than the force acting on the riveted portion 313'a in the vertical direction (Z-axis direction of FIG. 6).

Hereinafter, an assembly process for a battery frame, according to some embodiments of the disclosure, will be described in further detail.

Referring to FIG. 5A, the first frame 100' may be arranged on the second frame 200' so that the first boss portion 110' is positioned on the second boss portion 210'.

In this regard, the support body 111' of the first boss portion 110' may be inserted between the first fixing body 211' and the second fixing body 212' of the second boss portion 210' and be in close contact with and supported by the first fixing body 211' and the second fixing body 212'.

The insertion hole portion 111'a may be formed in the support body 111' of the first boss portion 110' in a direction (X-axis direction) of a side edge of the first frame 100'.

The first coupling hole portion 211'a to the third coupling hole portion 213'a may be formed in the first fixing body 211' to the third fixing body 213', respectively, of the second boss portion 210' in the direction (X-axis direction) of the side edge of the first frame 100'.

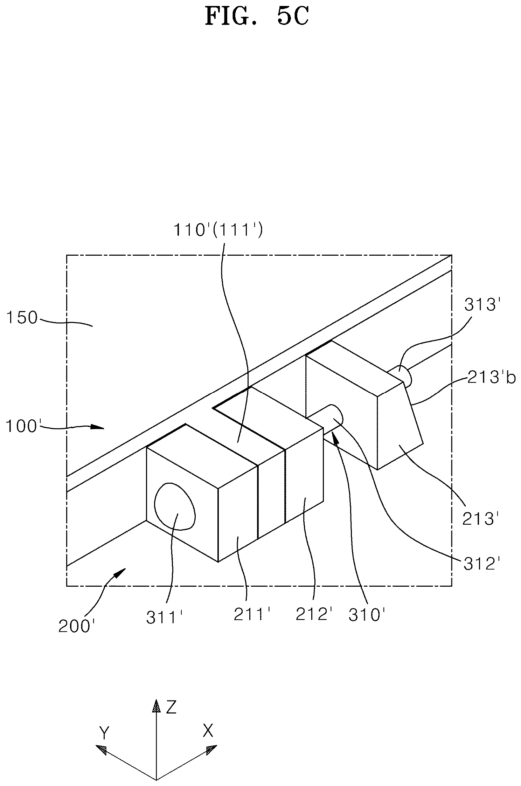

In this regard, the first coupling hole portion 211'a to the third coupling hole portion 213'a may also be positioned in a straight line in the axial direction (X-axis direction) of the shaft portion 312' so that the shaft portion 312' (see FIG. 5C) of the rivet 310' (see FIG. 5C) passes through the first coupling hole portion 211'a to the third coupling hole portion 213'a.

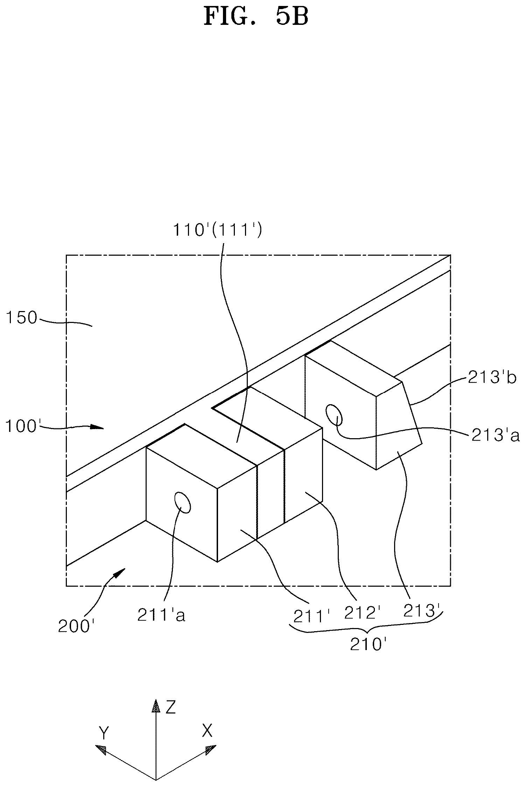

Referring to FIG. 5B, the first frame 100' in which the battery cells 150 are mounted may be seated on the second frame 200' in a vertical direction (Z-axis direction).

In this regard, opposite sides of the support body 111' of the first boss portion 110' may be in close contact with the first fixing body 211' and the second fixing body 212' of the second boss portion 210'.

In this state, the insertion hole portion 111'a of the support body 111' may be in communication with the first coupling hole portion 211'a of the first fixing body 211' and the second coupling hole portion 212'a of the second fixing body 212'.

According to some embodiments, a cut section CS through which the shaft portion 312' (see FIG. 5C) of the rivet 310' (see FIG. 5C) is exposed may be formed between the second fixing body 212' and the third fixing body 213'.

Referring to FIG. 5C, the shaft portion 312' of the rivet 310' is sequentially inserted into the first coupling hole portion 211'a of the first fixing body 211', the insertion hole portion 111'a of the support body 111', the second coupling hole portion 212'a of the second fixing body 212', and the third coupling hole portion 213'a of the third fixing body 213'.

In this regard, the head portion 311' of the rivet 310' may be seated and supported on the outer side surface of the first fixing body 211', and the end portion 313' of the shaft portion 312' of the rivet 310' may protrude outward from the outer side surface 213'b of the third fixing body 213'.

The outer side surface 213'b of the third fixing body 213' may be inclined downward in a direction (X-axis direction of FIG. 6) in which the shaft portion 312' of the rivet 310' passes, and an angle α between the outer side surface 213'b of the third fixing body 213' and a surface of the second frame 200' on which the first frame 100' is seated may be 45 degrees or more.

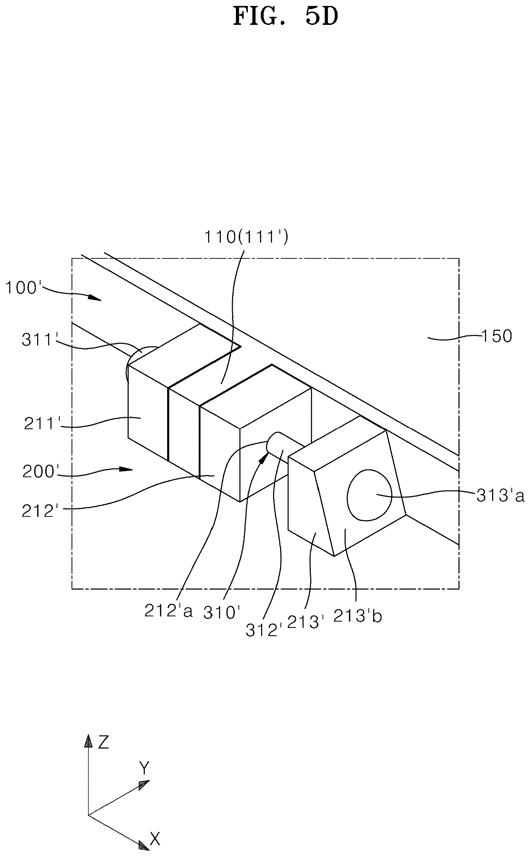

Referring to FIG. 5D, the first boss portion 110' may be fixed to the second boss portion 210' by riveting the end portion 313' of the shaft portion 312' of the rivet 310', the end portion 313' protruding outward from the outer side surface 213'b of the third fixing body 213'.

In this regard, the end portion 313' of the shaft portion 312' of the rivet 310' may be riveted to form a riveted portion 313'a having a shape similar to the head portion 311', and a portion of the shaft portion 312' of the rivet 310' may be exposed through the cut section CS, which is a space between the second fixing body 212' and the third fixing body 213'.

Therefore, after assembling the first frame 100' and the second frame 200', in case that the exposed portion of the shaft portion 312' is cut and the rivet 310' is removed, the first frame 100' may be separated from the second frame 200', thus being in a disassembled state.

According to one or more embodiments, even in case that the thickness of frames decreases to accommodate the slimming of battery cells, the frames may be relatively easily and accurately assembled.

According to one or more embodiments, after assembly, separation between frames may be performed easily and conveniently.

However, the effects obtainable through the disclosure are not limited to the effects described above, and other unmentioned technical effects will be clearly understood by those of ordinary skill in the art from the description of the disclosure described below.

While the disclosure has been described with reference to specific embodiments and drawings, the disclosure is not limited thereto and it will be apparent to those of ordinary skill in the art that various modifications and changes can be made within the technical spirit of the disclosure and the scope of the following claims, and their equivalents.

## Claims

1. An assembly structure of a battery frame, the assembly structure comprising:
a first boss portion (110) protruding from a side edge (101) of a first frame (100) in which a battery cell is mounted and having an insertion hole portion (111a, 112a) formed in a direction of the side edge (101);
a second boss portion (210) arranged to correspond to the first boss portion (110) on a second frame (200) on which the first frame (100) is seated, and having a coupling hole portion (211a, 212a) corresponding to the insertion hole portion (111a, 112a); and
a fastening member (310) having a shaft portion (312) passing through the insertion hole portion (111a, 112a) and the coupling hole portion (211a, 212a), wherein an end portion of the shaft portion (312) is fixed.

2. The assembly structure as claimed in claim 1, wherein
the second boss portion (210) comprises:
a first fixing body (211) contacting and supporting the first boss portion (110) and having a first coupling hole portion (211a); and
a second fixing body (212) spaced apart from the first fixing body (211) in an axial direction of the shaft portion (312) and having a second coupling hole portion (212a),
wherein a cut section, CS, is between the first fixing body (211) and the second fixing body (212), the cut section exposing a portion of the shaft portion (312) to an outside.

3. The assembly structure as claimed in claim 2, wherein
the first boss portion (110) comprises:
a first support body (111) in the cut section, having a first insertion hole portion (111a), and contacting the first fixing body (211); and
a second support body (112) in the cut section, having a second insertion hole (112a) portion, and contacting the second fixing body (212),
particularly wherein a distance between the first support body (111) and the second support body (112) is 1 to 2 times a diameter of the shaft portion (312).

4. The assembly structure as claimed in claim 2 or 3, wherein
an outer side surface (212b) of the second fixing body (212) is inclined downward, an end portion (313) of the shaft portion (312) being fixed to the outer side surface (212b) of the second fixing body (212),
particularly wherein an angle between the outer side surface (212b) and a surface of the second frame (200) on which the first frame (100) is seated 45 degrees or more.

5. The assembly structure as claimed in any of claims 1-4, wherein
a height of the first boss portion (110) is 2 to 3 times a diameter of the shaft portion (312).

6. The assembly structure as claimed in any of claims 1-5, wherein
a protrusion length (L) of the first boss portion (110) is 2 to 3 times a diameter of the shaft portion (312).

7. The assembly structure as claimed in claim 1, wherein
the second boss portion (210') comprises:
a first fixing body (211') contacting and supporting one side surface of the first boss portion (110');
a second fixing body (212') contacting and supporting another side surface of the first boss portion (110'); and
a third fixing body (213') spaced apart from the second fixing body (212') in an axial direction of the shaft portion (312),
wherein a cut section is between the second fixing body (212') and the third fixing body (213'), the cut section exposing a portion of the shaft portion (312) to an outside.

8. The assembly structure as claimed in claim 7, wherein
a distance between the second fixing body (212') and the third fixing body (213') is set to 2 times or less a diameter of the shaft portion (312).

9. A battery package comprising:
at least one battery cell (150);
a first frame (100) having the at least one battery cell (150) mounted therein and comprising a first boss portion (110) protruding from a side edge (101) thereof, the first boss portion (110) having an insertion hole portion (111a, 112a) formed in a direction of the side edge (101); and
a second frame (200) on which the first frame (100) is seated and which comprises a second boss portion (210) corresponding to the first boss portion (110), the second boss portion (210) having a coupling hole portion (211a, 212a) formed to correspond to the insertion hole portion (111a, 112a),
wherein a shaft portion (312) of a fastening member (310) passes through the insertion hole portion (111a, 112a) and the coupling hole portion (211a, 212a) and an end portion of the shaft portion (312) is fixed, to assemble the first frame (100) to the second frame (200).

10. The battery package as claimed in claim 9, wherein
the second boss portion (210) comprises:
a first fixing body (211) contacting and supporting the first boss portion (110) and having a first coupling hole portion (211a); and
a second fixing body (212) spaced apart from the first fixing body (211) in an axial direction of the shaft portion (312) and having a second coupling hole portion (212a),
wherein a cut section, CS, is between the first fixing body (211) and the second fixing body (212), the cut section exposing a portion of the shaft portion (312) to an outside.

11. The battery package as claimed in claim 10, wherein
the first boss portion (110) comprises:
a first support body (111) in the cut section, having a first insertion hole portion (111a), and contacting the first fixing body; and
a second support body (112) in the cut section, having a second insertion hole (112a) portion, and contacting the second fixing body (212),
particularly wherein a distance between the first support body (111) and the second support body (112) is set to a size of 1 to 2 times a diameter of the shaft portion.

12. The battery package as claimed in claim 10 or 11, wherein
an outer side surface (212b) of the second fixing body (212) is inclined downward, an end portion (313) of the shaft portion (312) being fixed to the outer side surface (212b) of the second fixing body (212),
particularly wherein an angle between the outer side surface (212b) and a surface of the second frame (200) on which the first frame (100) is seated 45 degrees or more.

13. The battery package as claimed in any of claims 9-12, wherein
a height of the first boss portion (110) is 2 to 3 times a diameter of the shaft portion (312).

14. The battery package as claimed in any of claims 9-13, wherein
a protrusion length (L) of the first boss portion (110) is 2 to 3 times a diameter of the shaft portion (312).

15. The battery package as claimed in claim 9, wherein
the second boss portion (210') comprises:
a first fixing body (211') contacting and supporting one side surface of the first boss portion (110');
a second fixing body (212') contacting and supporting another side surface of the first boss portion (110'); and
a third fixing body (213') spaced apart from the second fixing body (212') in an axial direction of the shaft portion (312),
wherein a cut section is between the second fixing body (212') and the third fixing body (213'), the cut section exposing a portion of the shaft portion (312) to an outside,
particularly wherein a distance between the second fixing body (212') and the third fixing body (213') is set to 2 times or less a diameter of the shaft portion (312).
